# EUROPEAN PATENT SPECIFICATION

(11) **EP 2 148 310 B1**
(45) Date of publication and mention of the grant of the patent: **06.07.2016**
(21) Application number: 08104811.8
(22) Date of filing: 21.07.2008
(51) Int. Cl.: G09B 27/08

(54) **Data retrieval apparatus**
Vorrichtung zum Datenabruf
Appareil de récupération des données

(43) Date of publication of application: 27.01.2010
(73) Proprietor: IDT Electronic Products Limited, Hong Kong (HK)
(72) Inventor: Chan, Raymond, Hong Kong (CN)
(74) Representative: Boult Wade Tennant

(56) References cited:
- CA-A1- 2 224 597
- DE-A1- 10 315 389
- GB-A- 2 378 305
- US-A- 5 030 100
- US-A- 5 945 985
- US-A1- 2008 090 219

## Description

### FIELD OF INVENTION

The present invention relates to data retrieval apparatus and system that is particularly, but not exclusively, for educational use.

### BACKGROUND OF INVENTION

Data retrieval apparatus of the type concerned are known in general. Most of these apparatus comprise a globe and a pen connected by an electric cable to the globe for selecting a geographical location on the globe to cause a built-in speaker of the globe to play voice information relevant to the selected location. CA 2224597 describes an audio-video globe device comprising a base and a globe with index information on its surface. The base includes a memory device for storing data associated with the index information, a controller for retrieving the data from the memory device, a display unit connected to the controller, and a hand held operator. GB 2378305 describes a data retrieval system comprising data retrieval apparatus and a central server both connected to a network. When a user selects a piece of index information on the data retrieval apparatus the apparatus requests and receives from the server data information and an image, whereby information corresponding to a selected location can be displayed by the data retrieval apparatus.

The invention seems to provide improved data retrieval apparatus.

### SUMMARY OF THE INVENTION

According to the invention, there is provided a data retrieval apparatus, which comprises a base unit having a globe whose surface bearing a predetermined set of index information on geographical areas on the globe, and a handheld operator. The base unit further includes a memory device for storing data information associated with the index information, a controller for retrieving from the memory device the data information, a first wireless receiver connected to the controller and a second wireless receiver for communicating with a remote network. The second wireless transceiver is connected to the controller. The handheld operator further contains a sensor for sensing the index information when the sensor is brought close to the surface of the base unit, and a first wireless transmitter which sends the index information to the first wireless receiver in the base unit. When the first wireless receiver receives the index information from the first wireless transmitter, the controller retrieves from the memory device the data information based on a first reference to the index information sensed by the sensor and displays the data information on the display unit.

In another aspect of the current invention, a data retrieval system includes a data retrieval apparatus, a first network, a central server, and a second network. The data retrieval apparatus includes a surface containing selected locations bearing a predetermined set of index information. The apparatus is configured to display data information on a display unit according to corresponding index information selected by a user on the surface. The first network is connected to the data retrieval apparatus. The central server is connected to the first network. The second network is connected to the central server. When the user selects a piece of the index information on the data retrieval apparatus, the data retrieval apparatus requests and receives from the central server the data information and image, whereby information corresponding to any selected location can be displayed by the data retrieval apparatus.

The current invention adopted an interactive, intuitive, and interesting way of learning geographical knowledge and the likes, which is to make selection of object by viewing the geographical representation and "touch" it. Whenever the user sees a location or geographical area on the globe that is of interest, he can directly point to that area in a very straightforward way, without even the need of knowing the name of that area. In this way, the user no longer needs to input the desired item by keyboard, nor does he need to use a pointer or mouse to choose the desired item in a list or a table in a computer format.

In another aspect, the data retrieval system in this invention provides an efficient and most updated source for grasping the information concurrently updated in the world, due to a real-time retrieval feature When a user is interested in the real-time and latest information, such as the live scene of a city, he can obtain that information quickly via the globe network, and in at the same time he can still use the simple and intuitive way of visually selecting the geographical locations.

### BRIEF DESCRIPTION OF FIGURES

Fig. 1 is a front perspective view of a base unit of another embodiment of data retrieval apparatus in accordance with the invention;
Fig. 2 is a rear perspective view of the base unit of Fig. 1:
Fig. 3 is a front perspective view of the base unit of Fig. 1, with a slidable horizontal board revealed;
Fig. 4 is a top plan view showing an operation panel of the base unit of Fig. 1;
Fig. 5 shows the perspective view of the pen in an embodiment of data retrieval apparatus.
Fig. 6 shows schematic functional block diagram of the operating circuitry of the data retrieval apparatus.
Fig. 7 is a screenshot showing a control panel of an operation program associated with the data retrieval apparatus.
Fig. 8 shows the system block diagram of the data retrieval system in one embodiment.

### DETAILED DESCRIPTION OF THE PREFERRED EMBODIMENTS

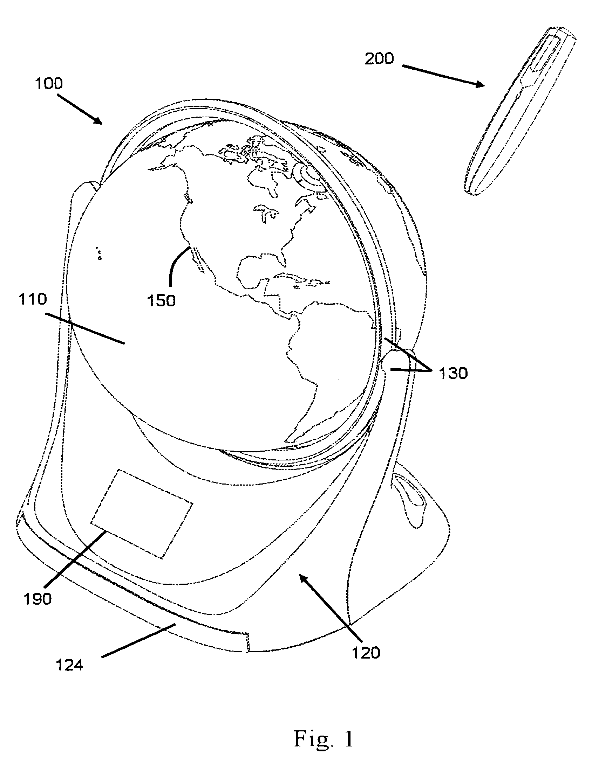

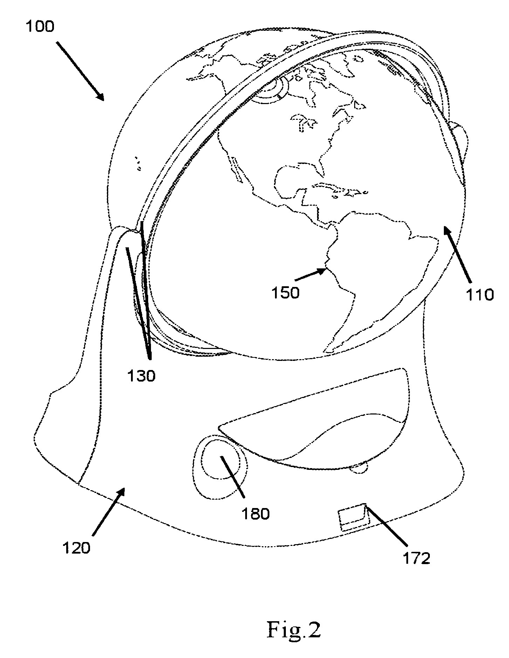

Referring to the Fig. 1 and Fig. 2, in another aspect of the invention, there is shown a data retrieval apparatus which comprise a base unit in the form of a geographic globe **100** and a handheld pen-shaped operator or a pen **200** in short that is wireless and separate from and is co-operable wirelessly with the globe **100.** The globe **100** has a spherical body **110** whose outer surface bears a map of the world **150** which is encoded with a predetermined set of index information each corresponding to pre-assigned geographical location on the globe. The globe **100** includes a curved base **120** which supports the spherical body **110** for free 360° spinning in all directions on two, vertical and horizontal axes by means of a cross-pivot system **130** as is generally known in the art. In the front part of the base **120,** there is also a Liquid Crystal Display (LCD) screen **190** on the incaved region of the base **120.** In the embodiment shown, the LCD screen **190** is a 3.5" Thin Film Transistor (TFT) LCD screen. The base **120** further includes a horizontal board **124** which is slidable into and out of the bases' body like a drawer. The base **120** further includes an internal speaker (not shown) and an associated speaker jack **172** at the back, as well as a cradle **180** for locating the pen **200** upright on the base **120.**

The world map **150** is printed on the globe body **110** employing a dot coding scheme using four colors which are red, blue and yellow for the various pictorial graphical features of the map **150** and include black as dots printed on the red, blue and yellow layers. The black dots are arranged in repeating patterns to form codes, i.e. the index information, which are readable by the pen **200** to identify the various locations i.e. continents, countries, capitals and cities, etc. for data retrieval. The layer of index dots has a tone that is tuned as light as possible to be indiscernible so as not to affect the original picture colors of the map **150.**

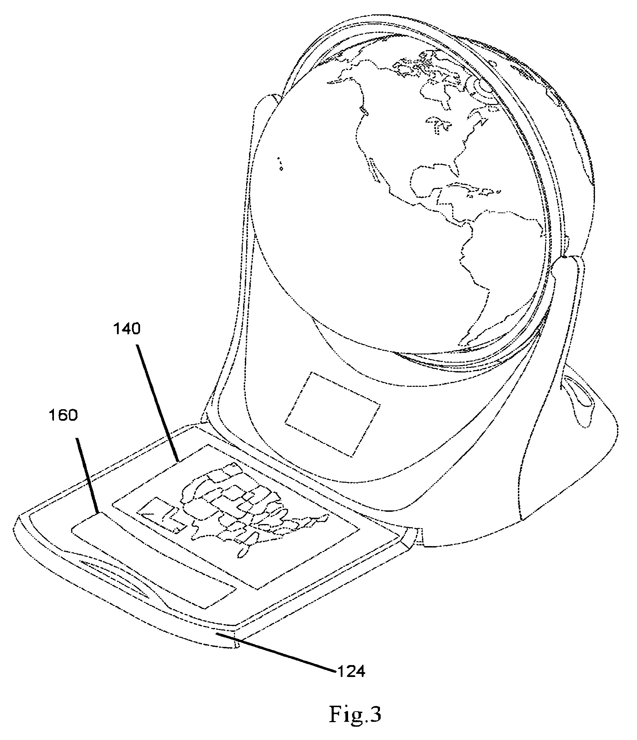

In Fig. 3, the globe base **120** has, on its front part, a horizontal board **124** which bears an operation panel **160** and a local map **140.** The upper surface of the board **124** has a label stuck thereon, which is printed with the local map **140** using the same dot coding scheme as the world map **150,** as well as operation panel **160** does, for reading by the pen **200** likewise in the same manner. The local map **140** and the operation panel **160** are normally hidden but it may be revealed by pulling out the board **124.**

Compared with the world map **150,** the local map **140** shows more detailed geographical information about the country in which the subject data retrieval apparatus is marketed (and used), for example information about the member states for the United States of America. The local map **140** offers an alternative to the world map **150**, providing a set of additional index information for data retrieval at the pen **200.**

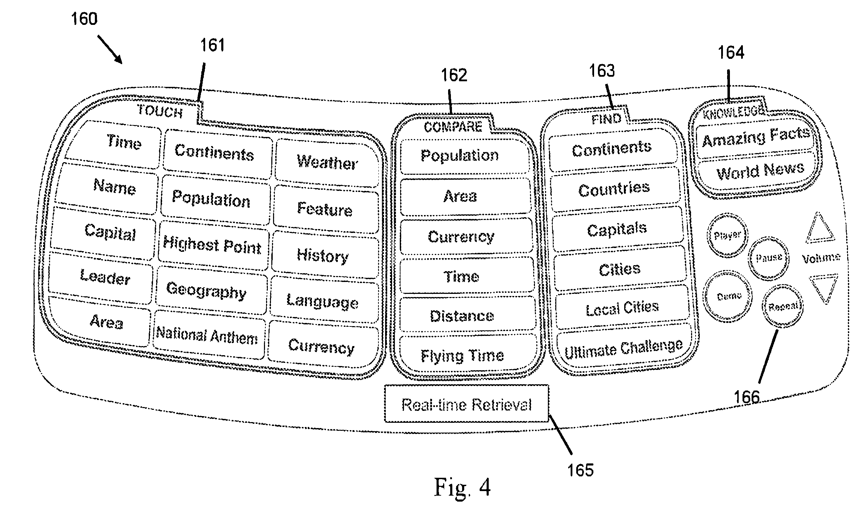

As shown in the embodiment of Fig. 4, the panel 160 is provided by a label printed with a pattern of four groups of game/information activity buttons i.e. TOUCH, COMPARE, FIND and KNOWLEDGE buttons 161 to 164, six control keys 166, using the same dot coding scheme as the world map 150 for reading by the pen 200 in the same manner, and a separate button 165 which is for real-time retrieval. The activity buttons 161 to 165 are named according to the categories or types of data that the corresponding activities are to perform upon as shown in Fig. 4, and are encoded individually for user's selection to input the chosen activity commands with desired data types to the pen 200. Similarly, the control keys 166 are named as shown, and encoded, to indicate the control to implement at the pen, namely Player (for user's age group selection), Pause, Demo, Repeat and Volume up and down.

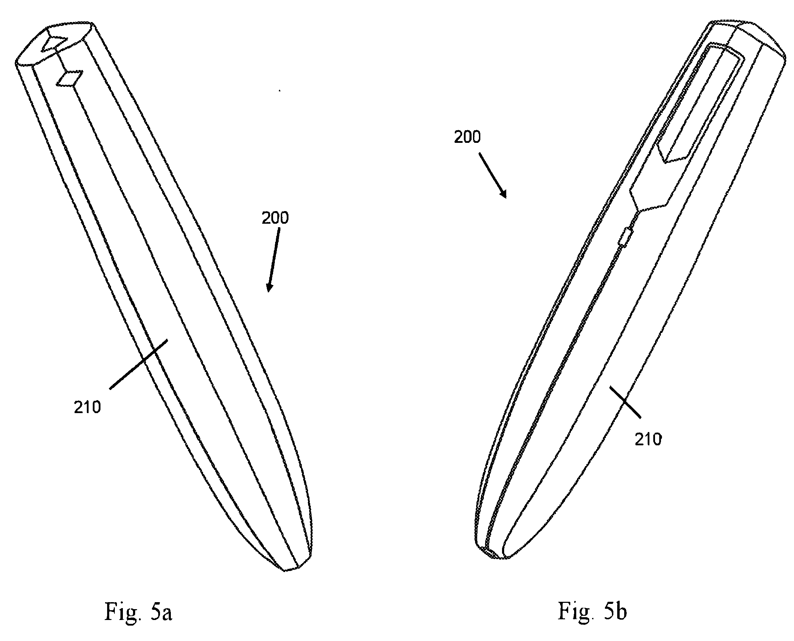

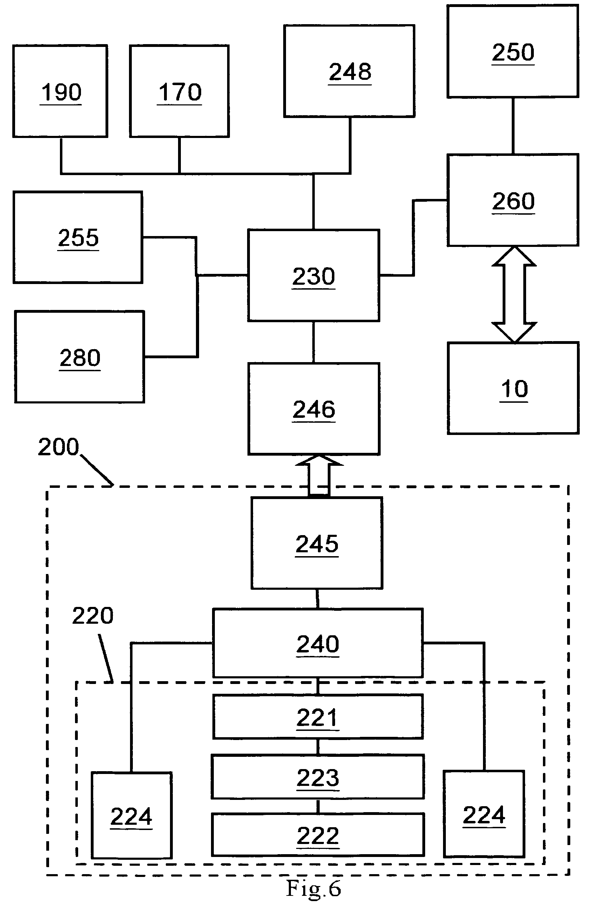

As shown in Fig. 5a and 5b, the pen **200** has an elongate casing **210**for holding by a user and an optical ID image sensor module **220** located within the tip (i.e. lower end) of the casing **210** for image capturing. Turning now to Fig. 6, the sensor module **220** is formed by a CMOS sensor **221,** a camera lens **222,** a filter **223** between the sensor **221** and the lens **222,** and a pair of infra-red (IR) light emitting diodes (LEDs) **224** on opposite sides of the lens **222.** The IR LEDs **224** are arranged to emit IR light at a surface bearing an image close to which the lens **222** is pointed at, with the IR light reflected from the surface detected by the sensor **221** through the lens **222** and filter **223,** whereby the image is captured. The pen **200** also includes an image processor **240** for processing (e.g. decoding or recognizing) an image captured by the sensor module **220.** The pen **200** also has a wireless transmitter **245** which is preferably a 2.4GHz wireless transmitter to transmit the index information decoded by the image processor **240** to the globe.

The globe **100** includes, as housed or supported within the base **120,** an MCU (microprocessor control unit) **230** for control and operation of other system components. a 2GB NAND flash memory **250** for storing data information and connected to the MCU **230,** a wireless receiver **246** to receive the index information from the pen **200,** a wireless WiFi Module **248** for connecting to a remote network, and a speaker **270** and the LCD screen **190** connected to the MCU **230** for announcing and/or displaying the data information stored in the memory **250.** The data information stored in the memory **250** can be video and voice or other data that comprises texts, images, animations, video clips, sound effects, human voices and music data. The flash memory **250** also serves to store the appropriate programs, codes and data, etc., such as system music and sounds, as required for the operation and functioning of the pen **200.** There is a real time clock **280** connected to the MCU **230,** which keeps the real time for the system.

The USB ISP bridge **260** is an in-system programming chip for USB downloading of program to non-flash memory. In the operating circuitry of the globe **100,** the bridge **260** is connected as an interface in circuit with the MCU **230** and the flash memory **250** for the MCU **230** to receive data from the memory **250.** More importantly, the bridge **260** also enables connection of the globe **100** using a USB cable to a user's PC (personal computer) **10** which is in turn connected to the Internet such that updated data information and programs, etc. can be downloaded, to update the content of the flash memory **250,** via the PC **10** and the Internet from a remote server which runs an online website/platform to serve and provide supports to general users of the subject data retrieval apparatus. The time kept by the pen's clock **280** can also be synchronized by or via the PC **10,** preferably automatically each time when the pen **200** is connected to the PC **10.**

The WiFi module **248,** on the other hand, is an alternative communication module to the USB ISP bridge **260.** The WiFi module **248** can connect to any external WiFi network, and even to the Internet ultimately, and any updated data information and programs, etc. can be downloaded, to update the content of the flash memory **250.** The WiFi module includes but not limited to the module using 802.11 a/b/g/n technologies.

In operation, when the user points the pen **200** at a desired geographic location of the world map **150,** or the local map **140,** the sensor module **220** at the pen tip captures the index dots printed over that position and then outputs the associated 8-bit raw data through a 2-bit data bus from the CMOS sensor **221** to the image processor **240.** In response, the image processor **240** decodes the raw data received from the sensor module **220** using a specific signal processing algorithm and then passes the decoded data to the wireless transmitter **245.** The wireless transmitter **245** will then transmit the decoded data to the wireless receiver **246** and the data will finally be transmitted to the MCU **230.**

The user can also select the desired activity and data type by tapping the pen **200** at the relevant button **161/162/163/164/165** on the operation panel **160.** In doing so, the pen's sensor module **220** captures the associated dot code and outputs the corresponding raw data to the image processor **240** and then the image processor **240** decodes the raw data and passes the decoded data to the wireless transmitter **245.** The wireless transmitter **245** will then transmit the decoded data to the wireless receiver **246** and the data will finally be transmitted to the MCU **230.**

The aforesaid selections of geographic location and of activity and data type can be performed in the reversed order. At the completion of these two user's actions, the MCU **230** will recognize and act on the command and data received from the wireless receiver **246** by executing the chosen activity function and retrieving the appropriate text/audio/video/image data file from the flash memory **250** and finally announcing or playing the corresponding video, images, text or audio segment at the speaker **270** and/or the LCD screen **190.**

The operation of the subject data retrieval apparatus will now be described in further detail.

There are 31 activities, namely TOUCH (x15), COMPARE (x6), FIND (x6). World News (x1), Amazing Facts (x1), Earth Facts (x1), and Real-time Retrieval(x1) all of which are selectable using the activity buttons **161** to **165.** For a first time user, the default age group is "5-8". Upon tapping the Player key **166,** the pen **200** will play "To change the number of player, press this button again" and then "Player+One, Two, Three, Four". Upon tapping the "Time" button **161** of the TOUCH activity, the pen **200** will play "Time hasn't been set yet. Please connect to your PC to download our latest information."

Each product of the subject data retrieval apparatus is accompanied by an installation CD for installation before use, including installing an associated operation program and relevant drivers, etc. on the PC **10** for use with the pen **200** and loading an initial set of data information (from the CD) into the pen's flash memory **250.** A unique access code is assigned to the apparatus, as appearing on the CD cover. The user should initially enter the access code into the operation program and then follow the on-screen instructions to register and activate the code. In particular, the user will be asked to select his/her age group and to press a download button to start download.

In one embodiment, the data retrieval apparatus is accompanied with a "coded" keyboard that can be made from any material, such as paper, rubber or plastic. This optical keyboard can replace a real keyboard, as it is printed with the characters that can be selected, together with the same type of indexed information used for the locations indicators described above for the globe. The characters may be anything that the device manufacturer wishes the user to learn and/or communicate such as letters, numbers, pictures or other symbols and images. Because each character is printed with a corresponding indexed information code that is recognizable with the system, the user can user the pen **200** to scan the characters (i.e. the corresponding indexed information) printed on the paper keyboard. Each scan is equivalent to the inputting of the selected character. If the characters are the same as a traditional keypad or keyboard, then it can be used as such but the hardware cost for the device can be greatly saved while providing the user with full capability of inputting text information. When the user is inputting the access code, he can use the pen **200** and the paper keyboard. In other circumstances such as inputting the SSID and password for the Wifi network. or inputting any information/command to the data retrieval apparatus, the user can always use the optical keyboard and the pen **200.** On the other hand, if other types of characters such as images are also provided on the optical keyboard. such as national flags and colours then this optical keyboard becomes a far more useful, versatile and interactive part of the present device and system than merely a replacement of a conventional electronic keyboard. The user can then try to match national flags to geographic areas on the globe, or select the right colours for various national flags. The images provide a substitute for traditional alphanumeric characters, such that even those who do not know the spelling of certain desired input may also be able to do so with a "one-click" action. This is particularly important for the learning convenience and enjoyment of small children or people who speak a different language.

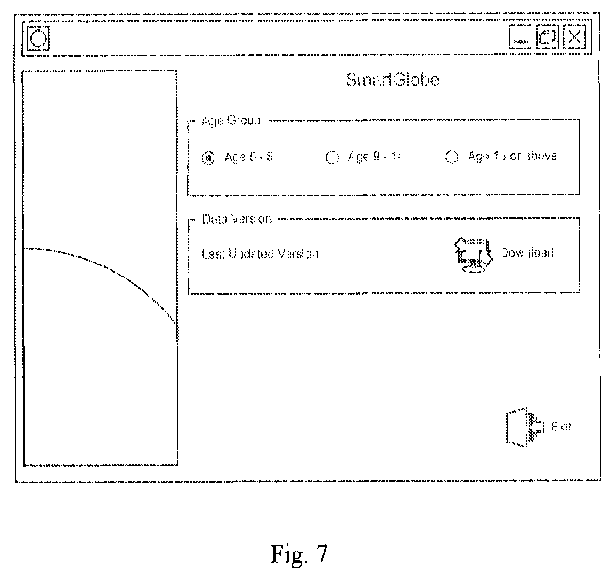

In general, upon connection of the globe **100** to the PC **10** that is in turn connected to the Internet, the operation program automatically runs and pops up a data update screen (Fig. 7) on the PC **10** and automatically checks for update on the server by sending information to the server to verify the content version and data specification. The relevant age group for the player is shown or can be selected on screen. The update checking process is run behind the screen. In case there is update information, the PC **10** will prompt and instruct the user to start download. If update is not necessary, the globe **100** will display on the LCD screen **190** "No new data available". In an alternative way, upon the connection of the globe **100** to a remote WiFi network that is in turn connected to the Internet via the WiFi module **248,** the build-in update program in the globe **100** can directly connects to the Internet and performs updating process similar to the one described above.

There are 15 TOUCH activities. While awaiting player's instructions on this game, the globe **100** will play, as appropriate, "Pick an activity, then touch the Globe for more information", "To start your game, press any button to select an activity" and "Then, touch the Globe for more information".

To start the TOUCH game, the player should tap any one of the TOUCH buttons **161** on the globe base **120** and then select a location on the globe body **110.** Taking New York as an example, the globe **100** will play the relevant voice segment as indicated in the following table, which shows the voice segments for all of the 15 data types or topics relative to different player age groups "5-8", "9-14" and "15+" (i.e. age 15 or above).

The topic can be changed at any time by tapping another activity button **161,** or a different country can be picked by tapping a new location on the world map **150,** whereupon the associated new piece of information is announced.

### EXAMPLE 1

### New York

| TOUCH items | Age 5-8 | Age 9-14 | Age 15+ |
|---|---|---|---|
| 1 Continent | | | |
| 2 Name | New York | New York (The Empire State) | Same |
| 3 Capital | Albany | Same | Same |
| 4 Leader | George Pataki | Same | Same |
| 5 Population | Over 19 million | Same | Same |
| 6 Time | (GMT-5) | Same | Same |
| 7 Area | New York is over half the size of the United Kingdom. | Same | Same |
| 8 Highest point | Mr. Marcy is the highest point in New York, it is over four times the height of the Empire State building. | Same | Same |
| 9 Geography | There are mountains in the northeast, where you can find Lake Ontario and Lake Erie. | | |
| 10 Currency | US Dollar | Same | Same |
| 11 Weather | New York has warm summers and cold winters | TBC | TBC |
| 12 Features | New York is home to New York City, which is one of the biggest and most popular cities in the world. | TBC | TBC |
| 13 History | New York was one of the original Thirteen Colonies. The Dutch bought Manhattan from the Indians for some trinkets | TBC | TBC |
| 14 Language | N/A | N/A | N/A |
| 15 National Anthem | The US national anthem | Same | Same |

### EXAMPLE 2

### Canada

| TOUCH items | Age 5-8 | Age 9-10 | Age 15+ |
|---|---|---|---|
| I Continent | North America | Same | Same |
| 2 Name | Canada | Same | Same |
| 3 Capital | Ottawa | Same | Same |
| 4 Leader | The prime minister of Canada is Paul Martin. | Same | Same |
| 5 Population | Over 32 million | Same | Same |
| 6 Time | (GMT- 08:00) | Same | Same |
| 7 Area | Canada + is very big. It's bigger than Australia. | Same | Same |
| 8 Highest point | Mount Logan is about two-thirds the size of Mount Everest, the tallest mountain on Earth. | Same | Same |
| 9 Geography | Canada is the world's second biggest country, next to Russia. In Canada you'll find large prairies with herds of cattle, golden fields of wheat, tall mountains with snowy tops, huge forests with very old trees, and beautiful fishing villages along the rocky Atlantic and Pacific Ocean coasts | Located in North America, bordering the North Atlantic Ocean on the east, the North Pacific Ocean on the west, and the Arctic Ocean on the north. | Ottawa is located at around 45 27 North latitude and 75 42 West Longitude, in the northern hemisphere. |
| 10 Currency | Canadian Dollar | Same | Same |
| 11 Weather | Canada reaches very far north, so the weather in many places is very cold and snowy all year round. But in southern Canada, near the U.S. border, the weather is more temperate, and changes with each of the four seasons. | The weather varies from temperate to sub-artic to artic. The average temperature of 24 degrees Fahrenheit. (Minus 4 degrees Celsius) | The average annual rainfall is 314mm. With the average climate ranging from 16 to 31 degrees Fahrenheit. (Minus 8 to 0 degrees Celsius) |
| 12 Features | See the bighom sheep in the snowy mountains and visit awesome Lake Louise up in the Rocky Mountains to see one of the most beautiful mountain lakes in the world! | The most recognizable icon in Canada is the CN Tower, along with Ontario maple syrup made from 100% pure maple sap, which is very famous. The sugar maple tree is unique to the southeastern part of Canada. | Canada's Royal Canadian Mounted Polices, also called 'Mounties", are a popular national symbol. The most important festival in Canada is the Maple Sugar Festival held in March. |
| 13 History | Canada + had many groups of native inhabitants before Europeans arrived, who lived, hunted and traded throughout the land. | The first inhabitants of Canada were native Indian peoples, primarily the Inuit. Their Independence day is on the 1^{st} of July, 1867 | Eastern Canada was settled by both English and French colonists and was ceded to England in 1763 after the Seven Years' War. |
| 14 Language | The official language of Canada is English. Hello! | Same | Same |
| 15 National Anthem | The Canada national anthm | Same | Same |

To start the COMPARE game, the player should tap any one of the COMPARE buttons **162** on the globe base **120,** whereby the type of information to compare is determined, and then select two locations on the world map **150** (or the local map **140**). During selection, the pen **100** will announce the name of the first location immediately upon tapping, then play "second point" to request a second location, and subsequently announce the name of second location immediately upon tapping.

Taking China/India, Japan/Italy and United States/Japan as examples, the following table lists the corresponding voice segments that the globe **100** will play in respect of all of the 6 data types to compare. Different player age groups "5-8", "9-14" and "15+" share the same voice segments.

| COMPARE items | Age 5-8 | Age 9-10 | Age 15+ |
|---|---|---|---|
| 16 Population | Population + China + about XXX that of India | " | " |
| 17 Area | Area + India + about + XXX that of + China | " | " |
| 18 Currency | Currency + China + about + XX + that of + India | " | " |
| 19 Time | Japan + about + 13 hours + earlier than + Italy | " | " |
| 20 Distance | United States + about + XXX + Miles + away from Japan | Same | Same |
| 21 Flying Time | The flying time is + about + XXX hour + and + XXX min. | Same | Same |

There are 6 FIND activities, some having three rounds of increasing challenge levels, for up to four players. To start the game, any one of the FIND buttons **163** should be tapped, whereupon the globe **100** will ask a question as shown in the table below and then await an answer. A certain length of time will be given for the player to tap the right place on the globe body **110,** namely 90 seconds for the age group "5-8", 60 seconds for the age group "9-14" and 45 seconds for the age group "15+".

In general, ten questions will be asked for each round, except the subject type "Continent" for which there will only be seven questions.

| TOUCH items | Age 5-8 | Age 9-10 | Age 15+ |
|---|---|---|---|
| 22 Continents | Look for 7 continents; No hints. | Look for 7 continents; No hints. | Look for 7 continents; No hints. |
| 23 Countries | Look for main countries in the world; 2 hints: | Look for larger countries in the world; 2 hints: | Look for larger countries in the world; 2 hints: |
| | a) Look in North/South hemisphere | a) Look in North/South hemisphere | a) Look in North/South hemisphere |
| | b) Look in (Continent) | b) Look in (Continent) | b) Look in (Continent) |
| 24 Capitals | Look for main countries' capitals; 3 hints: | Look for larger countries' capitals; 3 hints: | Look for countries' capitals; 3 hints: |
| | a) Look in North/South hemisphere | a) Look in North/South hemisphere | a) Look in North/South hemisphere |
| | b) Look in (Continent) | b) Look in (Continent) | b) Look in (Continent) |
| | c) Look in (Country) | c) Look in (Country) | c) Look in (Country) |
| 25 Cities | Look for main cities; 3 hints: | Look for larger cities; 3 hints: | Look for larger cities; 3 hints: |
| | a) Look in North/South hemisphere | a) Look in North/South hemisphere | a) Look in North/South hemisphere |
| | b) Look in (Continent) | b) Look in (Continent) | b) Look in (Continent) |
| | c) Look in (Country) | c) Look in (Country) | c) Look in (Country) |
| 26 Local Cities | Look for big cities. 1 hint: | Look for larger cities. 1 hint: | Look for cities. 1 hint: |
| | Look in city between (cities) / Look in city next to (City) | Look in city between (cities) / Look in city next to (City) | Look in city between (cities) / Look in city new to (City) |
| 27 Ultimate Challenge | Mix the above find game | Same | Same |

To play the Amazing Facts, the upper KNOWLEDGE button **164** should be pressed using the pen **200,** and then the first/next fact will be played. There are up to 20 facts, which will be updated monthly or bi-weekly. The button **164** is touched once for each new fact. The fact will not repeat until the last one has been played. All the age groups are given access to this activity but with different types of data.

To play the World News, the middle KNOWLEDGE button **164** should be pressed using the pen **200,** and then the first/next news will be played. There are up to 10 facts, which will be updated monthly or bi-weekly.

To play the Earth Facts, the lower KNOWLEDGE button **164** should be pressed using the pen **200,** and then the first/next news will be played. There are up to 20 facts, which will be updated monthly or bi-weekly.

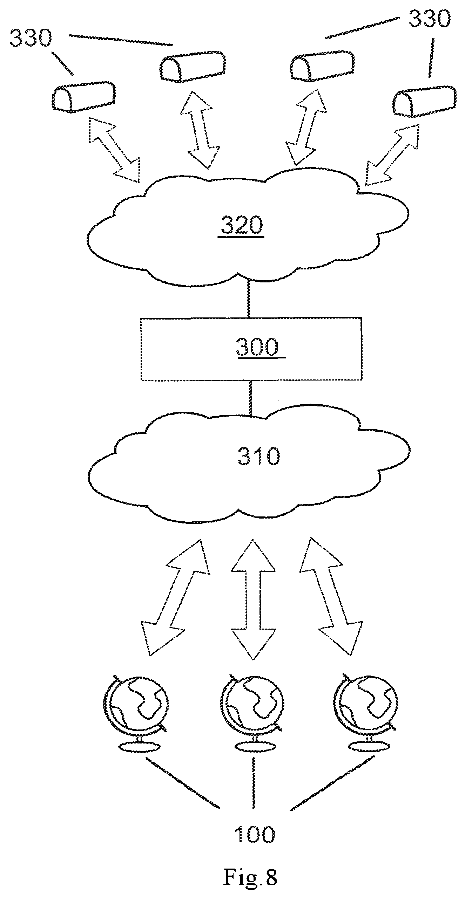

Now the function of retrieving real-time city scenes, or called City on Demand on the data retrieval apparatus, will be introduced. Referring to Fig. 8, a system for retrieving real-time city scenes includes a central server **300,** a first communication network **310,** a second communication network **320,** a plurality of cameras **330,** and at least one geographic globe **100.** The first communication network **310** and the second communication network **320** are preferably the Internet. The globe **100** is connected to the first communication network **310** via wired or wireless connection, i.e., through its USB ISP bridge and a PC, or directly though its WiFi module. The globe **100** is communicable with the central server **300.** On the other hand. a plurality of cameras 330 are connected through the second communication network **320** to the central server.

The cameras **330** may be installed in different locations in different cities around the world. For example, such cameras can be installed on a bridge, on a city street lamp pole, on a tower, etc. The purpose of these cameras is to capture the scene of the specific city, either in a real-time way or periodically recording.

In operation, when the user of the globe **100** wants to see the real-time or latest scenes of cities around the world, he need to use the pen to point to the city he is interested in on the globe **100,** or point to the name of a country if he wish to randomly view the scenes of cities in that country. In the next step, the button **165** should be pressed using the pen, and then the globe **100** will connect to the Internet and access the server **300** to search and download the camera video or still images for the selected city. Alternatively, the globe **100** can also download the camera video, still images or any other data information through the USB ISP bridge **260** which further connected to the PC 10 and thus ultimately connected to the Internet.

There are many ways for the central server **300** to store the camera video or still images collected from different cameras **330** around the world. For example, the server **300** can use real-time streaming technology and provide the globe **100** a streaming connection to view the real-time scenes from the cameras, upon user's selection of a specific city. Alternatively, the central server can obtain from all the cameras **330** over the world periodically by itself. When there is a user request come to the central server **330,** the central server **330** will provide a uploading connection for the globe **100,** and the globe **100** can download the latest video clip or still images through the internet.

When the globe **100** obtained the video or still images content through the central server **330,** it will display these contents on the LCD screen and/or play the audio through the audio speaker. Thus, the user can view the real-time scenes of any city in the world at any time, which is an intuitive and educational way to learn the knowledge of the world's cities.

There could be many ways of how the user viewing the scenes of a city on the globe **100.** If there are many cameras **330** located in different place of the city, the user can view the camera videos which are automatically switched periodically such that all the cameras videos can be viewed. Alternatively, the user can even choose which(s) camera's video he wishes to watch on the globe **100.**

In one exemplary embodiment, the globe **100** can further download other types of contents related to the specific city the user selected through the Internet. For example, photographs, articles, tour guides, etc, can be downloaded to the globe **100** and the user of the globe **100** can view them.

In another embodiment, the globe **100** is capable of receiving the input from the user as to control the angle/orientation of the specific camera that he is currently watching. Such input commands will be transmitted to the camera **330** via the central server **300,** and the camera **330** will acts according to the command by its mechanical device.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

In this particular embodiment, a globe (**100**) is employed as the base unit of the subject data retrieval apparatus such that the users can have a feel of geographical locations and directions around the planet. It is envisaged that the base unit can take the form of a book or bound charts, such as a world atlas (akin to the local map **140**) so that more encoded index information can be packed into a smaller size.

It should be noted that any other suitable coding schemes for the index information may be adopted, which do not require electrical wire/cable connection of the handheld operator to the base unit.

In the preferred embodiment described above, both the first communication network **310** and the second communication network **320** are the Internet. However, one skilled in the art should realize that these two networks might not be necessarily the same network as the Internet. Other types of networks, such as WAN(Wide Area Network), MAN(Metropolitan Area Network), etc, can be used as the first communication network or second communication network.

The subject matter of the data handled by the subject apparatus is unlimited. For example, the base unit can depict a zoo/jungle or animals around a globe, in that the animals are encoded with respective indexes for selective input to the handheld operator to prompt the operator to retrieve and play the relevant pre-recorded voice information relating to those animals, such as their names and habitat.

The globe **100** communicates with the PC **10** via USB connection. It is envisaged that the communication can be implemented using wireless connection technologies, such as the 2.4 GHz radio frequency protocol or the Bluetooth technology, in which case the bridge **260** is replaced by a suitable RF transceiver or Bluetooth module. In a similar way, the WiFi module **248** could be replaced by any other viable technologies such as cellular network module, Wi-max module or UWB module to provide network connection to the remote network.

## Claims

1. A data retrieval apparatus comprising:
a) a base unit (120) having a globe (100) whose surface bearing a predetermined set of index information on geographical areas on said globe (100); said base unit (120) further comprising:
i) a memory device (250) for storing data information associated with said index information;
ii) a controller (230) for retrieving from the memory device (250) the data information;
iii) a first wireless receiver (246) connected to said controller (230);
iv) a second wireless transceiver (248) for communicating with a remote network; said second wireless transceiver (248) connected to said controller (230);
v) a display unit (190), said display unit (191) connected to said controller (230);
b) a handheld operator (200), said operator (200) further comprising:
i) a sensor (220) for sensing said index information when the sensor (200) is brought close to the surface of the base unit (120);
ii) a first wireless transmitter (245), said first transmitter (245) sending said index information to said first wireless receiver (246) in said base unit (120);
wherein when said first wireless receiver (246) receives said index information from said first wireless transmitter (245), said controller (230) retrieves from said memory device (250) the data information based on a first reference to said index information sensed by said sensor (220) and displays said data information on said display unit(190).

2. The data retrieval apparatus of claim 1, wherein the base unit (120) includes a second surface (124) bearing a predetermined set of type information representing a plurality of types of the data information, for sensing by the sensor (220) of the operator (200) as a second reference, in conjunction with the first reference, for the controller (230) to retrieve the data information.

3. The data retrieval apparatus of claim 2, wherein the base unit (120) includes a bottom part for supporting the body, the bottom part including the second surface (124).

4. The data retrieval apparatus of claim 3, wherein the bottom part includes a third surface (140) bearing a predetermined set of further index information in the form of a relatively more detailed map of a specific part of the world, for sensing by the sensor (220) of the operator (200), as an alternative reference to the first reference, for retrieval of the data information by the controller (230).

5. The data retrieval apparatus of claim 4, wherein the second surface (124) is an outer surface of the bottom part and the third surface (140) is an inner surface of the bottom part that is revealable by a user.

6. The data retrieval apparatus of claim 4, wherein the index information is printed on the as codes on the first, second and third surface.

7. The data retrieval apparatus of claim 4, wherein said data retrieval apparatus further contains a fourth surface (160), wherein pre-determined contents are printed on said fourth surface (160) together with indexed information; whereby said fourth surface (160) in combination with the operator (200) may be used as an input device.

8. The data retrieval apparatus of claim 1, wherein said display unit (190) is a liquid crystal display screen.

9. The data retrieval apparatus of claim 1, wherein said second wireless transceiver (248) is a Wifi module.

10. A data retrieval system comprising:
a) a data retrieval apparatus comprising:
(1) a base unit (120) having a globe (100) whose surface bearing a predetermined set of index information on geographical areas on said globe (100); said base unit (120)further comprising:
i) a memory device (250) for storing data information associated with said index information;
ii) a controller (230) for retrieving from the memory device the data information;
iii) a first wireless receiver (246) connected to said controller (230);
iv) a second wireless transceiver (248) for communicating with a remote network; said second wireless transceiver (248) connected to said controller (230);
v) a display unit (190), said display unit (190) connected to said controller (230);
(2) a handheld operator (200), said operator (200) further comprising:
i) a sensor (220) for sensing said index information when the sensor (220) is brought close to the surface of the base unit (120);
ii) a first wireless transmitter (245), said first transmitter (245) sending said index information to said first wireless receiver (246) in said base unit (120);
b) a first network (310) connected to said data retrieval apparatus;
c) a central server (300) connected to said first network (310); and
d) a second network (320) connected to said central server (300) containing data information and image corresponding to said sensed index information;
wherein when said first wireless receiver (246) receives said index information from said first wireless transmitter (245), said controller (230) retrieves from said memory device (250) the data information based on a first reference to said index information sensed by said sensor (220) and displays said data information on said display unit (190);
wherein when said user selects a piece of said index information on said data retrieval apparatus said data retrieval apparatus requests and receives from said central server (300) the data information and image, whereby information corresponding to any selected location can be displayed by said data retrieval apparatus.

11. The data retrieval system of claim 10, wherein said central server (300) is further connected to a plurality of cameras (330), said plurality of cameras (330) being connected to said central server (300) via said second network (320); each said camera (330) adapted to obtain images of a pre-determined view; said images matched to a corresponding piece of said index information and data information.

12. The data retrieval system of claim 11, wherein said a plurality of cameras (330) are placed in different places in different cities or geographical area.

13. The data retrieval system of claim 11, wherein said central server (340) stores a predetermined duration of data information of every said camera (330).

14. The data retrieval system of claim 11, wherein said data retrieval apparatus retrieves real-time data information from said cameras (330).

15. The data retrieval system of claim 11, wherein said data retrieval apparatus further retrieves text or graphical information from the Internet according to said sensed index information.

## Patentansprüche

1. Datenabrufvorrichtung, die aufweist:
a) eine Basiseinheit (120) mit einem Globus (100), auf dessen Oberfläche sich ein vorgegebener Satz von Indexinformationen über sich auf dem Globus (100) befindende geographische Gebiete befindet, wobei die Basiseinheit (120) ferner aufweist:
i) eine Speichervorrichtung (250) zum Speichern von mit den Indexinformationen verknüpften Dateninformationen,
ii) eine Steuerung (230) zum Abrufen der Dateninformationen aus der Speichervorrichtung (250),
iii) einen mit der Steuerung verbundenen ersten Funkempfänger (246),
iv) einen zweiten Funktransceiver (248) zur Kommunikation mit einem Remote-Netzwerk, wobei der zweite Funktransceiver (248) mit der Steuerung (230) verbunden ist,
v) eine Anzeigeeinheit (190), wobei die Anzeigeeinheit (190) mit der Steuerung (230) verbunden ist,
b) eine Handbedienung (200), wobei die Bedienung (200) ferner aufweist:
i) einen Sensor (220), um die Indexinformationen zu erfassen, wenn der Sensor (220) nahe an die Oberfläche der Basiseinheit (120) gebracht wird,
ii) einen ersten Funksender (245), wobei der erste Funksender (245) die Indexinformationen an den ersten Funkempfänger (246) der Basiseinheit (120) sendet,
wobei, wenn an dem ersten Funkempfänger (246) die Indexinformation von dem ersten Funksender (245) empfangen wird, die Steuerung (230) aus der Speichervorrichtung (250) die Dateninformationen auf Basis einer ersten Referenz auf die mit dem Sensor (220) erfassten Indexinformationen abruft und die Dateninformationen auf der Anzeigeeinheit (190) anzeigt.

2. Datenabrufvorrichtung nach Anspruch 1, worin die Basiseinheit (120) eine zweite Oberfläche (124) aufweist, auf der sich ein vorgegebener Satz von Typinformationen befindet, der mehrere Dateninformationstypen repräsentiert, der mit dem Sensor (220) der Bedienung (200) als mit der ersten Referenz verbundene zweite Referenz zum Abrufen der Dateninformationen durch die Steuerung (230) erfasst werden kann.

3. Datenabrufvorrichtung nach Anspruch 2, worin die Basiseinheit (120) einen unteren Teil zum Stützen des Hauptteils aufweist, wobei sich die zweite Oberfläche (124) am unteren Teil befindet.

4. Datenabrufvorrichtung nach Anspruch 3, worin der untere Teil eine dritte Oberfläche (140) aufweist, auf der sich ein vorgegebener Satz weiterer Indexinformationen in Form einer verhältnismäßig detaillierteren Karte eines bestimmten Teils der Welt befindet, die von dem Sensor (220) der Bedienung (200) als zur ersten Referenz alternative Referenz für das Abrufen der Dateninformationen durch die Steuerung (230) erfasst werden können.

5. Datenabrufvorrichtung nach Anspruch 4, worin die zweite Oberfläche (124) eine äußere Oberfläche des unteren Teils bildet und die dritte Oberfläche (140) eine innere Oberfläche des unteren Teils bildet, die von einem Benutzer freigelegt werden kann.

6. Datenabrufvorrichtung nach Anspruch 4, worin die Indexinformation auf die erste, zweite und dritte Oberfläche als Code aufgedruckt ist.

7. Datenabrufvorrichtung nach Anspruch 4, worin die Datenabrufvorrichtung ferner eine vierte Oberfläche (160) aufweist, wobei auf die vierte Oberfläche (160) vorgegebene Inhalte zusammen mit indizierten Informationen aufgedruckt sind und wobei die vierte Oberfläche (160) zusammen mit der Bedienung (200) als Eingabevorrichtung eingesetzt werden kann.

8. Datenabrufvorrichtung nach Anspruch 1, worin die Anzeigeeinheit (190) ein Flüssigkristallbildschirm ist.

9. Datenabrufvorrichtung nach Anspruch 1, worin der zweite Funktransceiver (248) ein Wifi-Modul ist.

10. Datenabrufsystem, das aufweist:
a) eine Datenabrufvorrichtung, die aufweist:
(1) eine Basiseinheit (120) mit einem Globus (100), auf dessen Oberfläche sich ein vorgegebener Satz von Indexinformationen über sich auf dem Globus (100) befindende geographische Gebiete befindet, wobei die Basiseinheit (120) ferner aufweist:
i) eine Speichervorrichtung (250) zum Speichern von mit den Indexinformationen verknüpften Dateninformationen,
ii) eine Steuerung (230) zum Abrufen der Dateninformationen aus der Speichervorrichtung,
iii) einen mit der Steuerung verbundenen ersten Funkempfänger (246),
iv) einen zweiten Funktransceiver (248) zur Kommunikation mit einem Remote-Netzwerk, wobei der zweite Funktransceiver (248) mit der Steuerung (230) verbunden ist,
v) eine Anzeigeeinheit (190), wobei die Anzeigeeinheit (190) mit der Steuerung (230) verbunden ist,
(2) eine Handbedienung (200), wobei die Bedienung (200) ferner aufweist:
i) einen Sensor (220), um die Indexinformationen zu erfassen, wenn der Sensor (220) nahe an die Oberfläche der Basiseinheit (120) gebracht wird,
ii) einen ersten Funksender (245), wobei der erste Funksender (245) die Indexinformationen an den ersten Funkempfänger (246) der Basiseinheit (120) sendet,
b) ein erstes Netzwerk (310), das mit der Datenabrufvorrichtung verbunden ist,
c) einen zentralen Server (300), der mit dem ersten Netzwerk (310) verbunden ist, und
d) ein zweites Netzwerk (320), das mit dem zentralen Server (300) verbunden ist, der Dateninformationen und Bilder enthält, die zu den erfassten Indexinformationen gehören,
wobei, wenn an dem ersten Funkempfänger (246) die Indexinformation von dem ersten Funksender (245) empfangen wird, die Steuerung (230) aus der Speichervorrichtung (250) die Dateninformationen auf Basis einer ersten Referenz auf die mit dem Sensor (220) erfassten Indexinformationen abruft und die Dateninformationen auf der Anzeigeeinheit (190) anzeigt,
wobei, wenn der Benutzer an der Datenabrufvorrichtung eine der Indexinformationen auswählt, die Datenabrufvorrichtung die Dateninformationen und das Bild von dem zentralen Server (300) abfragt und erhält, wobei an der Datenabrufvorrichtung Informationen angezeigt werden können, die zu einem beliebig gewählten Ort gehören.

11. Datenabrufsystem nach Anspruch 10, worin der zentrale Server (300) ferner mit mehreren Kameras (330) verbunden ist, wobei die mehreren Kameras (330) über das zweite Netzwerk (320) mit dem zentralen Server (300) verbunden sind, jede der Kameras (330) zum Erhalt von Bildern einer vorgegebenen Ansicht ausgebildet ist und die Bilder zu der entsprechenden Indexinformation und Dateninformation passen.

12. Datenabrufsystem nach Anspruch 11, worin die mehreren Kameras (330) an verschiedenen Orten in verschiedenen Städten oder geographischen Gebieten angeordnet sind.

13. Datenabrufsystem nach Anspruch 11, worin der zentrale Server (340) von jeder Kamera (330) Dateninformationen eines vorgegebenen Zeitraums speichert.

14. Datenabrufsystem nach Anspruch 11, worin die Datenabrufvorrichtung aus den Kameras (330) Echtzeitdateninformationen bezieht.

15. Datenabrufsystem nach Anspruch 11, worin die Datenabrufvorrichtung aus dem Internet ferner Text oder graphische Informationen bezieht, die zu den erfassten Indexinformationen gehören.

## Revendications

1. Appareil de récupération de données comprenant :
a) une unité de base (120) ayant un globe (100) dont la surface portant un ensemble prédéterminé d'informations d'index sur des zones géographiques sur ledit globe (100) ; ladite unité de base (120) comprenant en outre :
i) un dispositif de mémoire (250) pour stocker des informations de données associées auxdites informations d'index ;
ii) une unité de commande (230) pour récupérer à partir du dispositif de mémoire (250) les informations de données ;
iii) un premier récepteur sans fil (246) relié à ladite unité de commande (230) ;
iv) un deuxième émetteur-récepteur sans fil (248) pour communiquer avec un réseau distant ; ledit deuxième émetteur-récepteur sans fil (248) étant relié à ladite unité de commande (230) ;
v) une unité d'affichage (190), ladite unité d'affichage (191) étant reliée à ladite unité de commande (230) ;
b) un élément de commande portatif (200), ledit élément de commande (200) comprenant en outre :
i) un capteur (220) pour détecter lesdites informations d'index lorsque le capteur (200) est amené à proximité de la surface de l'unité de base (120) ;
ii) un premier émetteur sans fil (245), ledit premier émetteur (245) envoyant lesdites informations d'index audit premier récepteur sans fil (246) dans ladite unité de base (120) ;
dans lequel, lorsque ledit premier récepteur sans fil (246) reçoit lesdites informations d'index à partir dudit premier émetteur sans fil (245), ladite unité de commande (230) récupère à partir dudit dispositif de mémoire (250) les informations de données sur la base d'une première référence auxdites informations d'index détectées par ledit capteur (220) et affiche lesdites informations de données sur ladite unité d'affichage (190).

2. Appareil de récupération de données de la revendication 1, dans lequel l'unité de base (120) comporte une deuxième surface (124) portant un ensemble prédéterminé d'informations de type représentant une pluralité de types des informations de données, pour la détection par le capteur (220) de l'élément de commande (200) en tant que deuxième référence, conjointement avec la première référence, pour l'unité de commande (230) pour récupérer les informations de données.

3. Appareil de récupération de données de la revendication 2, dans lequel l'unité de base (120) comporte une partie inférieure pour supporter le corps, la partie inférieure comportant la deuxième surface (124).

4. Appareil de récupération de données de la revendication 3, dans lequel la partie inférieure comporte une troisième surface (140) portant un ensemble prédéterminé d'informations d'index supplémentaires sous la forme d'une carte relativement plus détaillée d'une partie spécifique du monde, pour la détection par le capteur (220) de l'élément de commande (200), en tant que référence alternative à la première référence, pour la récupération des informations de données par l'unité de commande (230).

5. Appareil de récupération de données de la revendication 4, dans lequel la deuxième surface (124) est une surface extérieure de la partie inférieure et la troisième surface (140) est une surface intérieure de la partie inférieure qui peut être révélée par un utilisateur.

6. Appareil de récupération de données de la revendication 4, dans lequel les informations d'index sont imprimées sous forme de codes sur les première, deuxième et troisième surfaces.

7. Appareil de récupération de données de la revendication 4, dans lequel ledit appareil de récupération de données contient en outre une quatrième surface (160), où des contenus prédéterminés sont imprimés sur ladite quatrième surface (160) conjointement avec des informations indexées ; moyennant quoi ladite quatrième surface (160) peut être utilisée, conjointement avec l'élément de commande (200), en tant que dispositif d'entrée.

8. Appareil de récupération de données de la revendication 1, dans lequel ladite unité d'affichage (190) est un écran à cristaux liquides.

9. Appareil de récupération de données de la revendication 1, dans lequel ledit deuxième émetteur-récepteur sans fil (248) est un module Wifi.

10. Système de récupération de données comprenant :
a) un appareil de récupération de données comprenant :
(1) une unité de base (120) ayant un globe (100) dont la surface portant un ensemble prédéterminé d'informations d'index sur des zones géographiques sur ledit globe (100) ; ladite unité de base (120) comprenant en outre :
i) un dispositif de mémoire (250) pour stocker des informations de données associées auxdites informations d'index ;
ii) une unité de commande (230) pour récupérer à partir du dispositif de mémoire les informations de données ;
iii) un premier récepteur sans fil (246) relié à ladite unité de commande (230) ;
iv) un deuxième émetteur-récepteur sans fil (248) pour communiquer avec un réseau distant ; ledit deuxième émetteur-récepteur sans fil (248) étant relié à ladite unité de commande (230) ;
v) une unité d'affichage (190), ladite unité d'affichage (191) étant reliée à ladite unité de commande (230) ;
(2) un élément de commande portatif (200), ledit élément de commande (200) comprenant en outre :
i) un capteur (220) pour détecter lesdites informations d'index lorsque le capteur (200) est amené à proximité de la surface de l'unité de base (120) ;
ii) un premier émetteur sans fil (245), ledit premier émetteur (245) envoyant lesdites informations d'index audit premier récepteur sans fil (246) dans ladite unité de base (120) ;
b) un premier réseau (310) relié audit appareil de récupération de données ;
c) un serveur central (300) relié audit premier réseau (310) ; et
d) un deuxième réseau (320) relié audit serveur central (300) contenant des informations de données et une image correspondant auxdites informations d'index détectées ;
dans lequel, lorsque ledit premier récepteur sans fil (246) reçoit lesdites informations d'index à partir dudit premier émetteur sans fil (245), ladite unité de commande (230) récupère à partir dudit dispositif de mémoire (250) les informations de données sur la base d'une première référence auxdites informations d'index détectées par ledit capteur (220) et affiche lesdites informations de données sur ladite unité d'affichage (190) ;
dans lequel, lorsque ledit utilisateur sélectionne un élément desdites informations d'index sur ledit appareil de récupération de données, ledit appareil de récupération de demande et reçoit à partir dudit serveur central (300) les informations de données et l'image, moyennant quoi des informations correspondant à un emplacement sélectionné quelconque peuvent être affichées par ledit appareil de récupération de données.

11. Système de récupération de données de la revendication 10, dans lequel ledit serveur central (300) est en outre relié à une pluralité de caméras (330), ladite pluralité de caméras (330) étant reliées audit serveur central (300) via ledit deuxième réseau (320) ; chacune desdites caméras (330) étant adaptée pour obtenir des images d'une vue prédéterminée ; lesdites images étant mises en correspondance avec un élément correspondant desdites informations d'index et desdites informations de données.

12. Système de récupération de données de la revendication 11, dans lequel ladite pluralité de caméras (330) sont placées dans des endroits différents dans différentes villes ou zone géographique.

13. Système de récupération de données de la revendication 11, dans lequel ledit serveur central (340) stocke une durée prédéterminée d'informations de données de chacune desdites caméras (330).

14. Système de récupération de données de la revendication 11, dans lequel ledit appareil de récupération de données récupère des informations de données en temps réel à partir desdites caméras (330).

15. Système de récupération de données de la revendication 11, dans lequel ledit appareil de récupération de données récupère en outre des informations textuelles ou graphiques depuis Internet selon lesdites informations d'index détectées.
